# FASCICULE DE BREVET EUROPEEN

(11) **EP 1 926 340 B1**
(45) Date de publication et mention de la délivrance du brevet: **10.06.2009**
(21) Numéro de dépôt: 07301371.6
(22) Date de dépôt: 17.09.2007
(51) Int. Cl.: H04Q 3/00, H04W 8/08

(54) **Système de transmission avec coopération de plusieurs mandataires pour la réalisation de l'itinérance virtuelle pour des opérateurs mobiles**
Übertragungssystem mit Zusammenarbeit von mehreren Beauftragtern zur Erstellung eines virtuellen Roamings für Mobiltelefonieanbieter
Transmission system with cooperation of several agents for implementing virtual roaming for mobile operators

(30) Priorité: 24.11.2006 FR 0655092
(43) Date de publication de la demande: 28.05.2008
(73) Titulaire: Henry-Labordère, Arnaud, 75007 Paris (FR)
(72) Inventeur: Henry-Labordère, Arnaud, 75007 Paris (FR)
(74) Mandataire: Herrburger, Pierre

(56) Documents cités:
- WO-A-20/07057187
- US-A1- 2003 013 464

## Description

La présente invention concerne un système de transmission avec coopération de plusieurs mandataires pour la réalisation de l'itinérance virtuelle pour les opérateurs de mobile, c'est-à-dire un système de transmission à plusieurs mandataires pour l'itinérance virtuelle de mobiles avec portabilité éventuelle, les mobiles ayant pour numéro le numéro dit nominal avant qu'ils soient en portage.

### Etat de la technique

La portabilité des numéros est offerte dans la plupart des pays d'Europe de l'Ouest, aux Etats-Unis, à Hong-Kong, notamment depuis de nombreuses années. Elle permet à un abonné de mobile de changer d'opérateur du même pays, en gardant son numéro MSISDN (a titre d'exemple ce numéro commence par 33 6 en France).

Cela entraîne qu'on ne peut plus à partir de l'analyse du numéro MSISDN (33 608, 33 680 etc... pour Orange France 33 603, 33 612, etc...pour SFR) d'un mobile et d'un plan de numérotation, savoir directement à quel réseau ce mobile est abonné.

Dans le protocole MAP, il existe 3 primitives MAP « requêtes » qui doivent être envoyées à un équipement HLR dans le réseau de l'abonné avec comme argument le numéro MSISDN :

| | |
|---|---|
| SEND ROUTING INFO FOR SM | par un SMSC vers le HLR |
| REPORT STATUS DELIVERY | par un SMSC vers le HLR |
| SEND ROUTING INFO | par un GMSC vers le HLR (pour le Routage Optimal qui est une norme GSM) |

Il est aussi intéressant de permettre à 2 opérateurs de mobiles sans accord d'itinérance, que leurs abonnés puissent néanmoins utiliser le réseau de l'autre. Et ce par l'intermédiaire d'un mandataire mettant en oeuvre un système « Roaming Hub », comme cela est décrit par le brevet.

Quand il s'agit de connecter 2 ou plus « Roaming Hub », il est évident que la technique de transmission consistant à faire un routage au niveau Pont Sémaphore (le protocole MTP) est insuffisante : beaucoup de « Roaming Hub » n'ont pas de Point Sémaphore International permettant de diriger la signalisation directement vers un autre « Roaming Hub » ayant aussi un Point Sémaphore International; le routage doit se faire, pour être général, au niveau du protocole SCCP avec les adresses internationales « GT » (Appellation Globale), ce qui permet très facilement de créer des chaînes de plus de 2 mandataires C1 -> C2 ...> Cn avec l'adressage GT.

Alors qu'il est plus difficile de créer des chaînes de plusieurs mandataires C1 -> C2 ; -> Cn, dans le réseau Sémaphore car il faut créer éventuellement des routes MTP entre C1 et Cn.

Il n'est pas possible avec les seules adresses MTP ou SCCP de transmettre assez d'information pour assurer le service complet de portabilité du numéro.

Il est donc nécessaire de transmettre en plus des références supplémentaires au niveau TCAP, par l'intermédiaire de la couche MAP standard pour assurer le service de portabilité des numéros.

Et, dans ce qui précède, toutes les couches MTP, SCCP, TCAP, MAP et CAMEL doivent rester rigoureusement standards pour assurer l'interopérabilité entre des constructeurs de « Roaming Hub » différents. Standard veut dire que les paramètres utilisés sont ceux prévus dans les normes telles que[3], avec leur codage et leur longueur exactement standard.

Le document US 2003/00 13 464 concerne la transmission de SMS vers un mobile en portabilité dans un réseau du même pays que l'opérateur d'origine.

Ce procédé nécessite l'interrogation de tous les HRL du pays pour déterminer celui auquel appartient l'abonné en portage. Ce procédé est relativement long à mettre en oeuvre et ne constitue pas un optimum. La difficulté de la mise en oeuvre de ce procédé augmente avec la multiplication de la portabilité.

De plus, il n'est pas envisageable d'appliquer ce procédé à un portage dans des réseaux d'autres pays que le pays du réseau d'origine.

### But de l'intention

La présente invention a pour but de développer un système de transmission à plusieurs mandataires pour l'itinérance virtuelle de mobiles avec portabilité éventuelle dans le cas de plusieurs mandataires, éventuellement de fournisseurs différents, reliés entre eux par le réseau SS7 et destinés à collaborer pour fournir l'ensemble des services dans le cas de la « portabilité des numéros », notamment l'envoi de messages SMS à un numéro « porté » ou d'assurer le « routage optimum ».

### Exposé et avantages de l'invention

A cet effet, la présente invention concerne un système de transmission, **caractérisé en ce qu**'il comprend un groupe d'opérateurs, relié chacun à son mandataire,
- les mandataires coopérant pour la transmission de la signalisation,
- au moins un mandataire ayant un plan de numérotation comprenant
   - une liste des réseaux nominaux et des pays auxquels ils appartiennent, et
   - une liste des mandataires associés et des accords d'itinérance de ces mandataires avec les opérateurs,
- chaque mandataire ayant
   - un logiciel applicatif pour
   - traiter vers un destinataire, la signalisation envoyée par un opérateur à son mandataire (mandataire d'origine),
   - déterminer, par le numéro du mobile destinataire, le réseau nominal auquel il appartient et le pays de ce réseau nominal,
   - exécuter un algorithme pour déterminer un mandataire associé (mandataire final) ayant des accords d'itinérance avec les opérateurs du pays de l'opérateur du réseau nominal,
   - inscrire l'adresse du mandataire finale dans le champ « Destination Address »,
   - inscrire l'adresse du mandataire final dans le champ 'Destination Reference' si le mandataire d'origine ne peut s'adresser directement au mandataire final mais seulement par un mandataire intermédiaire et inscrire l'adresse du mandataire intermédiaire dans le champ « Destination Address »,
   - extraire chez le mandataire final, le numéro du réseau nominal à partir du numéro MSISDN transmis, pour lancer ensuite la signalétique vers les opérateurs du pays concerné et liés à ce mandataire final,
   - en cas d'échec de la tentative, exécuter un nouvel algorithme pour reprendre la procédure ci-dessus avec un autre mandataire final.

Ainsi, le système de transmission fait des tentatives successives en cherchant par le logiciel applicatif, un mandataire final et, en cas d'échec de la tentative par un premier mandataire final, le logiciel applicatif du mandataire d'origine exécute un nouvel algorithme pour déterminer un nouveau mandataire final ayant des accords d'itinérance avec d'autres opérateurs du pays de l'opérateur du réseau nominal pour effectuer une nouvelle tentative par ce mandataire final que l'opérateur d'origine peut atteindre soit directement soit par l'intermédiaire d'un autre mandataire intermédiaire.

Les opérations peuvent être répétées jusqu'à ce qu'une tentative de recherche permette de trouver le mobile destinataire correspondant au numéro MSISDN. En cas d'échec de toutes les tentatives, la transmission aura échouée.

Enfin, au cas où le logiciel applicatif du mandataire d'origine constate par l'intermédiaire de l'algorithme que le mandataire d'origine a le plus grand nombre d'accords d'itinérance avec les réseaux du même pays que le pays du réseau nominal, il fera d'abord une tentative pour localiser directement le mobile du numéro MSISDN. En cas d'échec, il cherchera un autre mandataire final que lui-même comme cela a été indiqué ci-dessus.

Ainsi, le système de transmission selon l'invention permet de résoudre deux problèmes :
- trouver un des « mandataires » qui a un accord avec un opérateur inconnu,
- lui transmettre la primitive MAP concernée en restant dans les standards GSM : SCCP, TCAP, MAP ou CAMEL de la mobilité. En effet, l'invention permet aux équipements d'utiliser des couches de protocole standard, car il suffit que seul le logiciel applicatif des mandataires « associés » soit adapté pour le fonctionnement décrit. Cela permet ainsi d'envoyer le SMS ou de faire le routage optimal décrit dans le standard [5] (si le service est offert) et de faire un appel direct d'un abonné du pays visité vers un visiteur sans passer par l'opérateur d'origine du visiteur.

Le système selon l'invention permet de transmettre les requêtes entre les mandataires par un procédé compatible avec les standards car il peut y avoir des fournisseurs différents, sans avoir à ajouter des champs d'informations, non prévus dans les formats des requêtes. L'invention permet ainsi de répondre à un besoin fondamental.

Suivant une autre caractéristique de l'invention, le système utilise des logiciels SS7 standards de la couche MAP ou CAMEL à la couche SCCP.

Suivant une autre caractéristique, les logiciels applicatifs se servent du paramètre « Destination Reference » du MAP OPEN ou du CAMEL OPEN pour recevoir du mandataire précédent ou mettre l'adresse du mandataire final s'il est différent d'un mandataire directement relié (adjacent), la procédure de transmission permettant de considérer l'ensemble du réseau constitué des différents mandataires, comme transparent, tout en fournissant le service en cas de portabilité du numéro pour les SMS ou le routage optimal vis-à-vis des équipements clients SMSC, GMSC ou autres qui restent munis de leurs logiciels standards non modifiés pour cela, et notamment effectuant la négociation de compatibilité de version de protocole MAP ou CAMEL dans le mandataire final de la chaîne de transmission dans tous les cas, y compris la portabilité du numéro.

### Dessins

La présente invention sera décrite ci-après de manière plus détaillée à l'aide d'un exemple de système de transmission à plusieurs mandataires représenté dans les dessins annexés dans lesquels :
- la figure 1 montre l'architecture de base du système de transmission composé de plusieurs mandataires reliés à des opérateurs,
- la figure 2 montre schématiquement un exemple d'envoi d'une primitive SMI-SM vers un mandataire,
- la figure 3 montre un autre envoi de primitive vers un autre mandataire,
- la figure 4 montre la transmission de la signalisation vers l'opérateur du mobile porté,
- la figure 5 est un schéma d'ensemble montrant un exemple de structure du système avec l'envoi des différents signaux.

### Description d'un mode de réalisation de l'invention

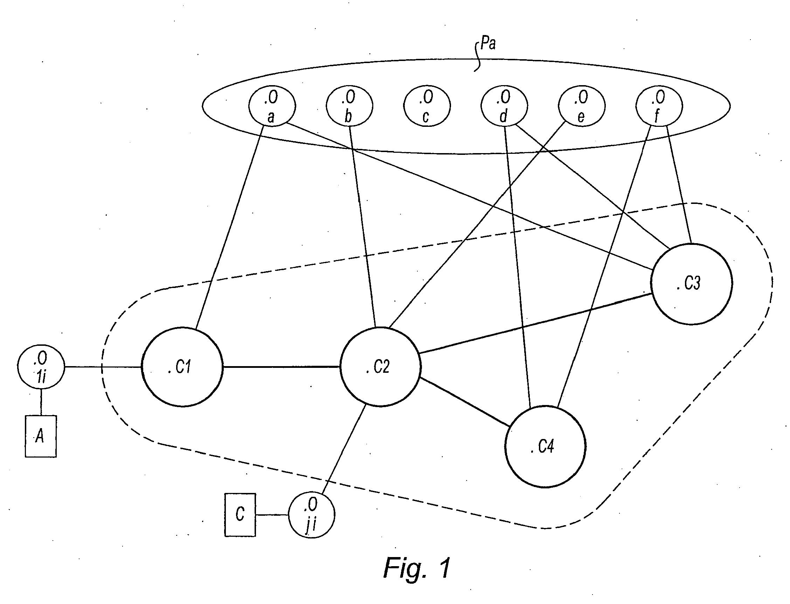

Selon la figure 1, un exemple de système de transmission entre des mobiles susceptibles d'être en portage se compose de mandataires C1, C2, C3, C4 associés pour la transmission de signalisation. Ces mandataires associés dans le système de transmission selon l'invention, seront appelés ci-après plus simplement mandataires ; il s'agit de concentrateurs au sens habituel de ce terme.

Les mandataires sont supposés avoir chacun un certain nombre d'accords d'itinérance avec les opérateurs Oi. Par exemple, le mandataire C1 est lié par un accord d'itinérance à l'opérateur Oa, le mandataire C2 aux opérateurs Ob, Oe, le mandataire C3 aux opérateurs Oa, Od, Of et le mandataire C4 aux opérateurs Od, Of. Les opérateurs Oa-Of sont ici et pour les besoins de la description, des opérateurs d'un même pays Pa. A titre d'exemple, parmi ces opérateurs du pays Pa, l'opérateur Oc n'a aucun accord d'itinérance avec l'un des mandataires C1-C4.

Les mandataires C1-C4 ont également des accords d'itinérance avec des opérateurs d'autres pays, mais pour les besoins de la description, on se limitera au cas des opérateurs du pays Pa.

Les mandataires Ci ont des accords de signalisation entre eux mais chaque mandataire peut n'être lié qu'à un seul autre mandataire dans le cas du système de transmission.

Le mandataire C1 est lié à l'opérateur O1i présenté dans une position particulière pour la présente description. Cet opérateur O1i peut être du pays Pa ou d'un autre pays ; il a des abonnés dont un mobile A est représenté. De la même manière, les mandataires C2, C3, C4 sont liés à des opérateurs. Par exemple, le mandataire C2 est lié à l'opérateur 02i dont un mobile D est représenté à titre d'exemple.

Les mandataires C1-C4 ont chacun un logiciel applicatif pour traiter la signalisation envoyée par des mobiles. Ce logiciel permet de déterminer, à partir du numéro MSISDN d'un mobile destinataire, le réseau nominal auquel il appartient et le pays de ce réseau nominal. Selon la terminologie utilisée dans la présente description, le réseau nominal d'un mobile est le réseau qui a attribué le numéro MSISDN au mobile. L'opérateur nominal est celui du réseau nominal.

Lorsque ce mobile B est en portage chez un autre opérateur, il conserve ce même numéro MSISDN qui contient la caractéristique du pays et celle du réseau nominal. Mais il n'y a pas de base de données mondiale permettant de savoir à partir d'un numéro MSISDN à quel réseau appartient actuellement le mobile portant ce numéro, si le mobile est porté par un autre réseau ou autre opérateur.

Les mandataires C1-C4 ont un plan de numérotation comprenant la liste des réseaux nominaux et les pays auxquels appartiennent ces réseaux ainsi que la liste des mandataires associés et des accords d'itinérance avec les opérateurs.

Le plan de numérotation des différents mandataires peut être ou non à jour, et cela au seul prix de la responsabilité des mandataires vis-à-vis de leurs clients respectifs.

Dans ces conditions, à partir du numéro MSISDN d'un mobile B qu'il reçoit d'un mobile A, le mandataire C1, avec son logiciel applicatif :
a) détermine le pays auquel appartient ce numéro,
b) détermine les opérateurs de ce pays à partir de sa liste,
c) détermine un mandataire associé (mandataire final) qui est l'un des mandataires C1-C4 ayant des accords d'itinérance avec les opérateurs du pays de l'opérateur nominal (mandataire final),
d) intervenir dans la requête de signalisation qu'il reçoit pour placer l'adresse du mandataire final choisi, dans le champ « Destination Reference », si le mandataire final est autre que lui-même, pour que ce mandataire final lance alors les requêtes vers les opérateurs associés dans le pays pour localiser le mobile correspondant au numéro MSISDN contenu dans la requête de signalisation,
e) en cas d'échec avec le mandataire final ci-dessus, il renouvelle l'essai en choisissant un autre mandataire final pour interroger les ou certains autres opérateurs du pays Pa et répéter ces essais successivement par un autre mandataire final jusqu'à l'aboutissement de la recherche ou l'épuisement des possibilités et l'échec de toute tentative vers le pays Pa.

Pour les besoins de la description, on supposera que le mobile A de l'opérateur O1i veuille adresser un message à un mobile en portage. On suppose également, comme indiqué, que l'opérateur O1i est associé au mandataire C1 et que le plan de numérotation du mandataire C1 est à jour, (peu importe que les plans de numérotation des autres mandataires associés C2, C3, C4 soient ou non à jour) pour la mise en oeuvre de l'invention.

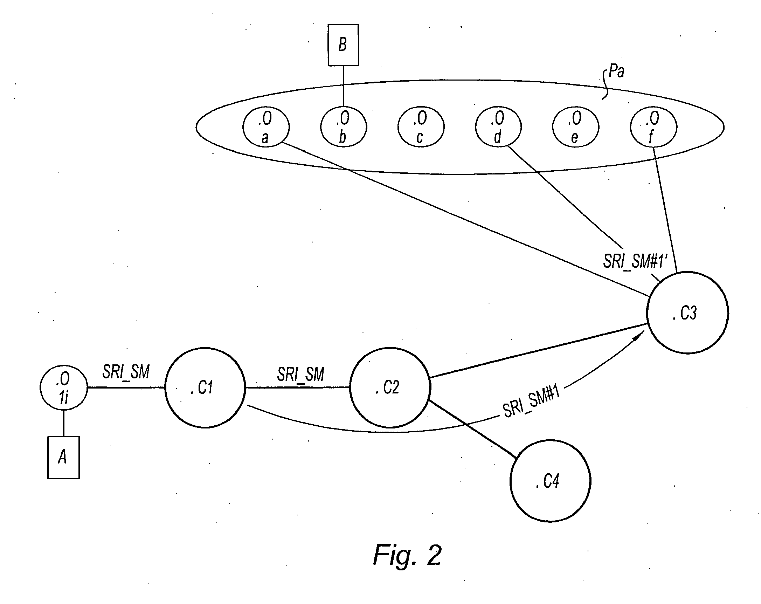

Les différentes étapes de la localisation du mobile en portage seront décrites à l'aide des figures 2, 3, 4.

Selon la première étape représentée à la figure 2, le mobile A s'adresse à son opérateur O1i qui envoie une requête de signalisation SRI-SM à son mandataire C1. A partir du numéro MSISDN du mobile destinataire contenu dans la requête SRI-SM venant du mobile émetteur A, le mandataire C1 détermine le réseau nominal auquel appartient le destinataire ainsi que le pays Pa de ce réseau nominal. On suppose que le réseau nominal est celui du pays Pa comprenant les opérateurs Oa, Ob, Oc, Od, Oe, Of.

Le mandataire C1 exécute alors un algorithme pour déterminer le mandataire associé ayant des accords d'itinérance avec les opérateurs Oa-Of du pays Pa de l'opérateur nominal. Dans l'exemple, le mandataire C3 a des accords avec les opérateurs Oa, Od, Of du pays Pa ; à partir de ces informations, l'algorithme, détermine parmi les mandataires associés, celui ayant par exemple le plus grand nombre de liens d'itinérance avec des opérateurs du pays Pa. Puis, le mandataire C1 s'adresse à ce mandataire C3. S'il peut s'adresser directement à lui, il inscrit l'adresse de ce mandataire dans le final champ (« Destination Address ») et la requête lui est transmise. Mais par hypothèse et pour que l'explication soit complète, on suppose que le mandataire C1 ne peut s'adresser directement au mandataire final C3. Il s'adresse à lui par un mandataire intermédiaire C2 avec lequel il est lié et qui est lui-même lié au mandataire C3.

Pour s'adresser au mandataire C3 sans avoir à modifier les équipements qui doivent utiliser les couches du protocole standard, le logiciel applicatif du mandataire C 1 inscrit l'adresse du mandataire final C3 dans le champ « Destination Reference », et à l'adresse de destination de sa requête, il inscrit l'adresse du mandataire C2. Cette requête est appelée requête SRI-SM # 1.

Le mandataire C2 reçoit cette requête et son logiciel applicatif interprète l'adresse du mandataire C3 inscrite dans le champ « Destination Reference » comme constituant l'adresse du mandataire final. Il place donc cette adresse dans le champ de l'adresse de destination habituelle dans la requête qu'il transmet ainsi au mandataire C3.

A la réception de cette requête, le mandataire C3 lance simultanément des requêtes SRI-SM # 1' vers les opérateurs Oa, Od, Of, auxquels il est lié par des accords d'itinérance.

Si le mobile destinataire portant le numéro MSISDN est en portage chez l'un des opérateurs Oa, Od, Of, celui-ci répond au mandataire C3 qui transmet l'information en retour vers l'opérateur O1i selon les moyens de signalisation habituels.

Si aucun des opérateurs Oa, Od, Of auquel s'est adressé le mandataire C3 ne porte le numéro MSISDN du mobile B cherché, la tentative a échoué et cette information est transmise au mandataire C1. En fait, la transmission de cette information négative correspond à une absence de réponse à deux niveaux, d'une part, le mandataire final C3 ne reçoit pas de réponse des opérateurs Oa, Od, Of auxquels il s'est adressé et d'autre part, le mandataire C3 ne répond pas lui-même au mandataire C1 ; ces différentes réponses étant attendues dans des délais de temporisation, fixés, l'absence de réponse dans le délai fixé signifie une réponse négative.

Dans ce cas, le mandataire C1 détermine avec son algorithme, un autre mandataire final susceptible de faire une recherche.

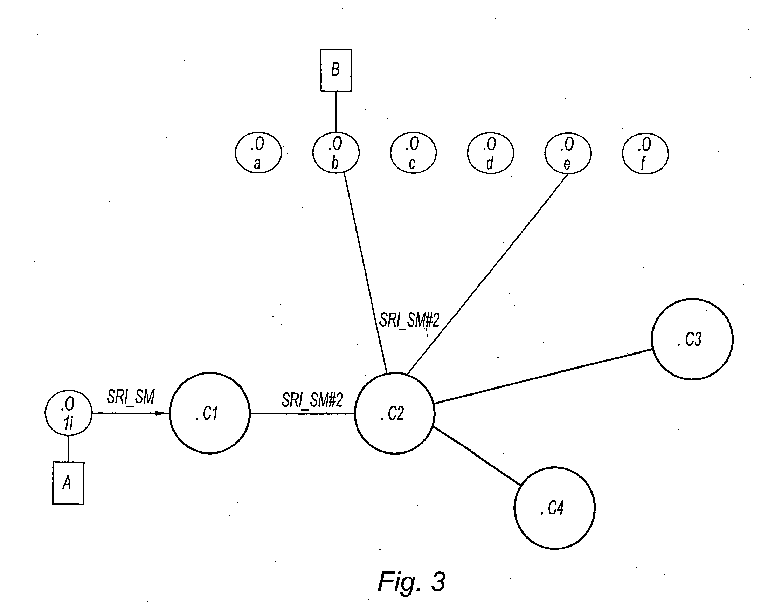

Cette situation est représentée à la figure 3. L'opérateur C1 a déterminé par son algorithme que le mandataire C2 a des accords d'itinérance avec d'autres opérateurs du pays Pa que les opérateurs auxquels est lié le mandataire C3.

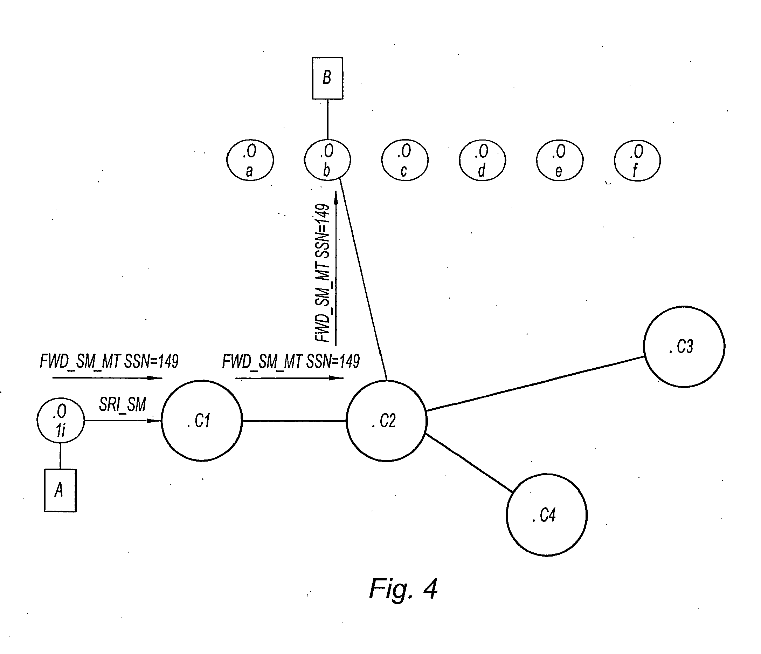

Une tentative est de nouveau effectuée par l'envoi d'une requête SRI-SM # 2 à destination du mandataire C2 qui s'adresse aux opérateurs auxquels il est lié. Dans le présent exemple, on suppose que l'opérateur Ob répond à la requête et confirme que le mobile B est en portage dans son réseau. Il est donc localisé et l'information est transmise en retour à travers les mandataires C2, C1 vers l'opérateur O1. Les messages de signalisation suivants peuvent alors être transmis au mobile B comme l'indique la figure 4, pour établir la liaison.

Si le mobile B n'était pas porté par un opérateur Oa-Of du pays Pa ayant des accords d'itinérance avec les mandataires C1-C4 et auxquels on peut ainsi accéder par la procédure décrite ci-dessus, si par exemple le mobile B est porté par l'opérateur Oc qui n'a aucun lien d'itinérance avec les mandataires C1-C4, aucune des tentatives de recherche décrite ci-dessus ne pourra aboutir à l'opérateur Oc. La liaison ne pourra pas être faite de cette manière.

En résumé, le mandataire C1 qui reçoit une demande de son client, l'opérateur O1i lui-même interrogé par un mobile A de son réseau, utilise ses listes d'opérateurs et de pays pour déterminer d'abord le pays dans lequel le mobile destinataire B est susceptible d'être porté par un réseau. Il utilise ensuite les réseaux auxquels l'association de mandataires C1-C4 peut s'adresser dans ce pays ; par des itérations successives par application de l'algorithme, il recherche dans le pays Pa l'opérateur susceptible de porter le numéro du mobile destinataire. Cette recherche se fait sans modification fondamentale de l'équipement des mandataires C1-C4 et seulement à l'aide du mandataire final, défini par l'algorithme de recherche du mandataire C1, l'adresse de ce mandataire final n'étant pas inscrite à l'adresse de destination d'une requête de signalisation habituelle mais dans la position « Destination Reference »; grâce au logiciel applicatif qui, au niveau de chacun des mandataires C1, C2, C3, C4 lit l'adresse inscrite dans le champ « Destination Reference » comme étant l'adresse du mandataire final auquel la requête doit aboutir pour être transmise vers les opérateurs.

### Description détaillée du fonctionnement

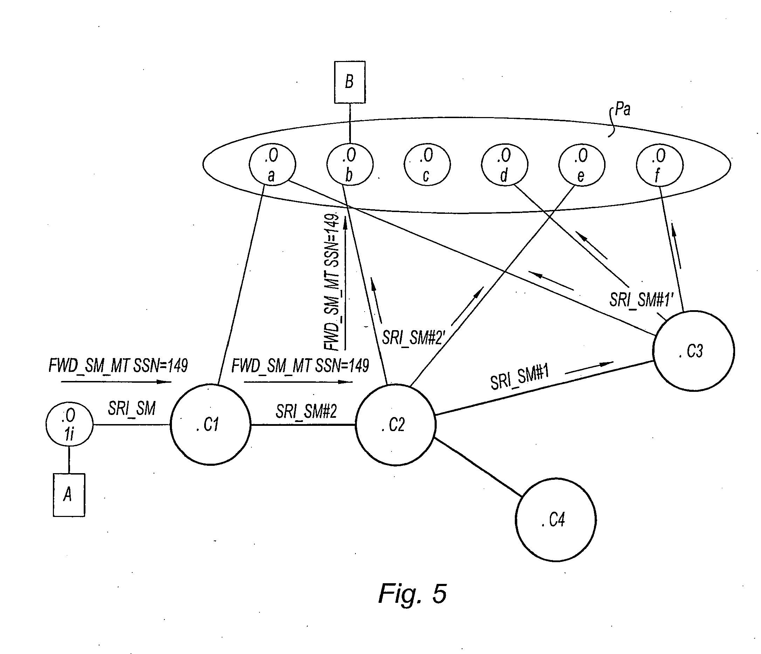

Le système de transmission sera décrit de manière plus détaillée ci-après à l'aide de la figure 5 sur l'exemple de la transmission du SEND ROUTING INFO FOR SM (SRI-SM) ; le cas est le même si l'entité émettrice ne connaît que le numéro MSISDN d'un numéro « porté ».

Le « Roaming Hub » C1 sera privilégié dans l'explication : c'est le mandataire d'origine ».

Le « Roaming Hubs » C1 a entré un plan de numérotation P comportant deux ensembles d'informations permettant
- à partir d'un MSISDN, de savoir à quel réseau Oj il appartient nominalement (s'il n'a pas été porté) et le pays Pj,
- à partir du nom du réseau (Orange France, Vodafone UK, etc...), de donner les différents « Roaming Hubs » (désignés seulement par leur GT (« Global Title »)) auxquels ces réseaux sont reliés.

Pour le bon fonctionnement du service fourni par C1 à ses clients qui lui sont directement connectés, les autres mandataires n'ont pas besoin d'avoir le plan de numérotation. Ceci simplifie beaucoup la mise en place et l'entretien du service de C1 (qui peut considérer les autres comme des concurrents, certes en coopération).

L'opérateur O1i veut envoyer un SMS vers un numéro MSISDN. Il envoie lc SRI_SM vers le mandataire C1 auquel il est relié. Grâce à son plan P1, le mandataire C1 détermine que numéro MSISDN est le numéro nominal de l'opérateur Oa du pays Pa (en réalité, il a été porté dans le réseau Ob). On suppose qu'il y 6 réseaux mobiles ou opérateurs dans le pays Pa, soit Oa, Ob, Oc, Od, Od, Oe, Of chacun reliés à différents mandataires C1...C4.

Le mandataire C1 (le « Roaming Hub d'origine ») détermine le réseau le plus probable auquel le numéro MSISDN appartient après « portage » éventuel (en général c'est l'opérateur Oa, mais cela n'est pas obligatoire). Puis, avec le plan, il détermine le ou les plus probables mandataires « Roaming Hub » qui ont un accord avec ce réseau.

Ce pourrait être le mandataire C1 lui-méme. Si un mandataire a des accords avec tous les opérateurs du pays Pa, il est éligible prioritairement et s'il y en a plusieurs, le mandataire C1 choisira celui qui minimise la nombre de tentatives, mais cela n'est pas obligatoire. Soit par exemple le mandataire C3 qui a des accords avec les opérateurs (Oa, Od, Of) parmi les 6 opérateurs du pays Pa. Il sera choisi par le mandataire C1 car c'est lui qui en a le plus et comporte aussi Oa, le réseau nominal.

Le mandataire C1 envoie la requête au mandataire C3 par le système de transmission objet de l'invention.

Le mandataire C3 adresse la requête alors "à l'aveugle"(sans être assuré du succès) en mettant le numéro MSISDN comme adresse dans le message SCCP contenant le SRI_SM. Comme l'opérateur Ob n'est pas dans la liste du mandataire C3, au bout d'une temporisation, aucun réseau ne répond et le mandataire C3 ne retourne pas de réponse au mandataire C1.

Sur échéance de sa propre temporisation, le mandataire C1 sait que le numéro MSISDN n'appartient à aucun des opérateurs à Oa, Od, Of.

Il sait alors qu'il est inutile d'essayer le mandataire C4 qui n'a des accords qu'avec les opérateurs Od et Of (puisqu'ils ont déjà été explorés par la requête précédente). Il ne lui reste que lui-même (qui a un accord avec l'opérateur Oa et qui est déjà « exploré ») et le mandataire C2 (qui a un accord avec les opérateurs Ob et Oe). Le mandataire C1 envoie la requête au mandataire C2 qui l'adresse aussi « à l'aveugle ». Mais comme le mandataire C2 a un accord avec l'opérateur Ob, celui-ci lui répond (MSISDN trouvé dans le réseau Ob) et le mandataire C2 répond au mandataire C1.

Pour la suite de la procédure d'envoi du SMS, le MSC visité dans la réponse du mandataire C2 au mandataire C1 étant identifié, le mandataire C1 doit envoyer le signal FORWARD SM MT à travers le mandataire C2 vers l'opérateur Ob avec lequel il n'a pas d'accord direct et il n'y a plus besoin de recherche. Là encore la procédure de transmission est utilisée.

Si le numéro MSISN avait été porté par l'opérateur Oc, celui-ci n'ayant pas d'accord avec un mandataire « Roaming Hub », il aurait été impossible d'envoyer le message SMS, dans l'exemple. C'est donc dans la méthode théorique, mandataire d'origine qui pilote la recherche.

Les systèmes clients reliés à l'opérateur Oi sont des équipements ordinaires (SMSC, GMSC) et le but est que la fonction de gestion de la portabilité du numéro soit fournie comme service par l'association des mandataires sans aucune modification des équipements ordinaires pour la portabilité des numéros quand ils utilisent un ou plusieurs mandataires (« Roaming Hub »).

SRI_SM est le SEND ROUTING INFO FOR SM envoyé par l'équipement de l'opérateur O1i vers le mandataire C1, SRI_SM #1 est transmis par le mandataire C1 vers le mandataire C3 qu'il a choisi, à travers le mandataire C2. SRI_SM #1' est envoyé par le mandataire C3 vers les réseaux de Pa.
SRI_SM #2 est transmis par le mandataire C1 vers le mandataire C2 (choix suivant) directement. SRI_SM # 2' est envoyé par le mandataire C2 vers les réseaux de Pa.

Ainsi, il y a nécessité d'avoir une procédure de transmission qui permette d'envoyer une requête « en forçant un transit » à travers un autre mandataire désigné, comme SRI_SM #1 de mandataire C1 vers mandataire C3 à travers mandataire C2, ce qui n'est pas prévu actuellement dans les standards mais qui peut cependant être réalisé grâce à l'invention.

### Procédure de transmission forçant la destination

La transmission de requêtes utilise le protocole standardisé TCAP, qui permet d'échanger les messages du protocole MAP[3] ou CAMEL[4] qui sont encapsulés dans deux parties distinctes des messages TCAP, la partie « Dialog » et la partie Component ». Les messages TCAP sont transmis en datagrammes (paquets) par le protocole SCCP. Tout ceci est connu.

Pour la transmission des requêtes entre deux mandataires adjacents, depuis le mandataire C1 ver le mandataire C2, alors que la requête est destinée au mandataire C3 par exemple, l'adresse destination mise par le mandataire C1 est forcément celle du mandataire C2 (le mandataire C1 et le mandataire C3 ne sont pas reliés). Cette adresse est le « Global Title(GT) » du mandataire C2. Mais il faut que l'information d'adresse finale du mandataire C3 puisse être transmise et en standard.

Or le protocole MAP et le protocole CAMEL utilisent, pour d'autres besoins que le forçage de destination, qui est nouveau, le paramètre "Destination Reference" , qui est inclus dans la partie « Dialogue » des requêtes TCAP (pas dans l'adresse SCCP).

Donc pour transmettre une requête SRI_SM #1 du mandataire C1 vers le mandataire C3, le mandataire C1 va créer par une requête MAP OPEN standard, décrit dans le document GSM 09.02, avec les paramètres suivant :

| | |
|---|---|
| Destination Address | GT de C2 |
| Origin Address | GT de C1 |
| Destination Reference | GT de C3 |

Le paramètre « Destination Reference » doit être, selon l'invention, codé comme une adresse standard pour contenir le GT du mandataire final, avec
- Type of Number (Ton): = International
- Numbering Plan Indicator(Npi): = ISDN(E164)
alors que l'utilisation classique de ce paramètre n'est prévue que pour certains services MAP listés à la section 7.3.1 de [3] décrivant le service MAP-OPEN. Services comme REGISTER-SS, INTERROGATE-SS, etc. et seulement pour transmettre l'IMSI
- Type of Number(Ton): = International
- Numbering Plan Indicator(Npi): = land mobile E212

Dans notre système de transmission, le champ est par contre systématiquement utilisé pour désigner le mandataire final de la chaîne de transmission auquel on veut transmettre n'importe quelle requête MAP ou CAMEL.

La couche MAP de C2 va donc recevoir, sans modification, ces 3 adresses et le logiciel applicatif de C2 va pouvoir les traiter. C2 va réemettre le SRI_SM # 1 dans une nouvelle transaction TCAP vers C3 avec
- destination address: = GT de C3 (pris dans la destination reference reçu de C1)
- origin address: = GT de C2
pas de destination reference (C3 est le mandataire final) C3 reçoit ceci avec son logiciel MAP qui reste donc standard avec l'invention. La couche applicative voit que C3 est le mandataire final (la destination reference reçue est vide), et envoie le SRI_SM #1' final vers les réseaux de Pa, en mettant
- destination address le GT du HLR est ignoré): = MSISDN (ceci est classique car
- origin address pas de destination reference: = GT de C3

Le routage de la réponse reçue (s'il y en a une) de la requête est par contre classique, la réponse TCAP servant d'une façon transparente pour émettre la réponse vers le mandataire final C3, puis de C3 vers C2, jusqu'à C1 et éventuellement O1i si la procédure de recherche s'arrête (succès ou fin d'exploration avec échec comme dans le cas où Oc serait le réseau recherché). Dans l'invention les messages MAP, CAMEL et TCAP restent rigoureusement standard, seules les logiciels applicatifs des mandataires roaming hub doivent mettre en oeuvre l'invention, ce qui est aisé.

Comme on le voit, les mandataires C2, C3, C4 n'utilisent pas de plan de numérotation pour le service fourni par C1 à ses propres clients. C'est C1 qui décide complètement du routage. C1 peut donc offrir un bon service, avec un plan bien tenu à jour, indépendamment du fait que C2, C3, C4 sont à jour, c'est leur problème.

### Transformation par les applications d'un champ MAP

Dans les services MAP
SEND ROUTING INFO FOR SM,
REPORT STATUS DELIVER,
FORWARD SHORT MESSAGE-MT (émission de SMS),
il existe un champ « SC_ADDR » au « niveau MAP » (Address du SMSC émetteur). Il est positionné par l'application de C1 et contiendrait normalement le GT de C1. Comme C1 n'a pas d'accord avec Oa, Ob, etc. ces réseaux pourraient ne pas l'accepter. Si le mandataire d'origine n'est pas le mandataire final, il met à la place le GT du mandataire final (qu'il connaît par l'algorithme de routage).
Pour
SEND ROUTING INFO,
c'est le champ « GMSC address » où l'application de C1 met le GT. C1 le remplace de même par celui du mandataire final. En dehors de ces transformations les paramètres MAP ne sont pas modifiés.
Alternativement la transformation peut être faite par le mandataire final.

### Ajustement dynamique de la temporisation de transmission

Toujours au niveau du logiciel applicatif des mandataires C1, C2, C3, C4, .. (le seul que nous voulons concerner), on doit forcer la valeur de la temporisation des requêtes compte tenu des délais crées par le chaînage de transactions TCAP dans le procédé de transmission. Compte tenu des plans de numérotation P1 et P2, C1 est capable de calculer le nombre de sauts (2) pour envoyer SRI_SM # 1 vers C3 à travers C2, C1 sait de même calculer le nombre de sauts (1 seul).

La temporisation est donc fixée par chaque mandataire à 6 x nombre de sauts + valeur standard pour la requête.

Cette valeur standard est par exemple 10 secondes pour un SEND ROUTING INFO FOR SM. Dans l'exemple cela donne 22 sec pour la temporisation du SRI_SM # 1 envoyé par C1 vers C3 à travers C2.

Le même système, avec recherche, est appliqué pour les 3 requêtes de la catégorie « adressage par MSISDN vers HLR dans le cas portablilité du numéro ».

Le même système de transmission avec insertion de la destination finale dans la "destination reference" est utilisé pour tous les autres messages MAP et CAMEL, ce qui permet l'interconnexion des mandataires « Roaming Hub ».

### Comportement des mandataires pour la gestion dynamique de la version MAP ou CAMEL

Pour les versions MAP ou CAMEL utilisées entre les mandataires, il faut obligatoirement que ce soit V2 ou V2+, sinon la partie Dialogue de TCAP ne comporte pas l'information destination reference. Une limitation du système est qu'on ne sait pas transmettre vers un équipement final de Oj qui ne supporterait que du MAP V1 (largement obsolète). L'invention assure que les équipements comme les SMSC et GMSC connectés à un mandataire « Roaming Hub » fonctionne et d'une façon transparente. Toujours dans l'exemple d'un SRI_SM, supposons que Oa (le réseau nominal) supporte V3, mais que Ob (le vrai réseau après portage) supporte seulement V2.

Oli transmet à C1 en V3 pour SRI_SM# 1 (il croit que le destinataire est Oa)
C1 transmet à C2 en V3 (qui est > V1)
C2 transmet à C3 en V3
C3 interroge Oa, Od, Of en V3 et n'a pas de réponse
C1 retransmet à C2 en V3 pour SRI_SM#2
C2 interroge Ob, Oe en V3 et a une réponse (qui vient de Ob) de « refus MAP »
   la réponse dit que V2 est supporté.

C2 réinterroge Ob, Oe en V2 cette fois (en enlevant les paramètres propres à V3) et a une réponse (qui vient de Ob) correcte (V2 supporté) qu'il retourne à C1. C1 retourne celle-ci à O1i (qui enchaînera avec un FORWARD_SM_MT dans l'exemple).

Selon l'invention, la négociation de version MAP est donc assurée par le mandataire final de la suite de requête. Cela élimine les recherches inutiles.

### Comportement des mandataires pour l'adressage d'un sous-système SCCP

Le « sous-système SCCP » désigne par un numéro SSN (Sub System Number, 6 pour un HLR, 8 pour un MSC, 149 pour un SGSN, etc...) un ensemble de fonctions qui peuvent cohabiter dans le même équipement (par exemple MSC (8) et VLR(7)) avec le même GT.

La seule chose qui distingue un service MAP FORWARD SM MT (FWD_SM_MT) envoyé par O1i (par exemple un SMSC) à un MSC ou un SGSN est le SSN. Tout le reste est identique. Le SSN est remonté en standard par la couche MAP au niveau du logiciel applicatif. Selon l'invention, les mandataires par leur logiciel applicatif récupèrent systématiquement le SSN reçu et le remettent vers le mandataire suivant. Ceci est illustré sur la figure.

### O1i transmet au SSN 149 de C1 le FWD_SM_MT

### C1 transmet au SSN 149 de C2 le FWD_SM_MT

### C2 transmet au SSN 149 (un SGSN) de Ob le FWD_SM MT

La procédure de transmission entre mandataires coopérant pour un système d'itinérance virtuelle entre opérateurs non liés par des accords d'itinérance est constituée 1) de systèmes utilisant des logiciels SS7 standards, de la couche MAP ou CAMEL à la couche SCCP, 2) le mandataire d'origine C1 est muni d'un plan de numérotation P formé de P1 et P2 permettant de trouver le nom du réseau nominal en fonction du MSISDN et l'adresse des mandataires coopérant ayant des accords avec les réseaux du même pays, 3) de logiciels applicatifs qui se servent du paramètre « destination reference » du MAP OPEN ou du CAMEL OPEN pour recevoir du mandataire précédent ou mettre l'adresse du mandataire final s'il est différent d'un mandataire directement relié (adjacent).

Cette procédure de transmission permet de considérer l'ensemble du réseau constitué des différents mandataires, comme transparent, tout en fournissant le service en cas de portabilité du numéro vis à vis des équipements clients SMSC, GMSC ou autres.

### Transmission du GT d'un HLR particulier au mandataire final

Il peut arriver qu'une table de traduction MSISDN vers GT du HLR n'existe pas, soit que cette table ne soit pas ouverte dans le réseau de transmission, soit qu'elle ne soit pas constituée dans le réseau mobile destinataire (fonction faite dans son GMSC), comme cela devrait classiquement être réalisé. Il peu arriver que le mandataire d'origine C1 dispose d'une liste à jour des différents HLRs sans nécessairement connaître celui correspondant au MSISDN visé. Pour étendre le domaine de l'invention , il est souhaitable que C1 puisse faire adresser un HLR précis par le mandataire final, ce qui permet, en mettant en oeuvre le principe[2] Chapitre 15. Par « balayage », d'exécuter les services MAP qui adressent un HLR Pour cela le système du destination_référence est étendu en utilisant un autre paramètre standard du MAP_OPEN, le origine_référence:
- destination address: = GT de C2
- origin address: = GT de C1
- destination reference: = GT de C3
- origine reference: = GT d'un HLR particulier de Oa

En changeant ce dernier champ, C1 peut faire effectuer par C3 un balayage des HLRs de Oa, jusqu'à ce que le MSISDN soit trouvé.

Dans tout ce qui précède l'utilisation des paramètres destination reference et origine reference peut être inversé, il ne s'agit que d'avoir un champ standard pour transporte l'information sans modifier le protocole MAP.

### Applicabilité du système de transmission

Il s'applique à toutes les primitives MAP et CAMEL utilisées pour la mobilité, les SMS, le GPRS, l'UMTS, les services supplémentaires, etc. décrits dans les standards [3] et [4] pour permettre leur transmission entre mandataires, pas seulement pour la portabilité des numéros.

## Revendications

1. Système de transmission à plusieurs mandataires pour l'itinérance virtuelle de mobiles avec portabilité éventuelle, les mobiles ayant pour numéro le numéro dit nominal avant qu'ils soient en portage,
**caractérisé en ce qu'**
il comprend un groupe d'opérateurs (Oli, Oij), relié chacun à son mandataire (C1-C4),
- les mandataires (C1-C4) coopérant pour la transmission de la signalisation,
- au moins un mandataire ayant un plan de numérotation comprenant
• une liste des réseaux nominaux (Oa-Of) et des pays (Pa) auxquels ils appartiennent, et
• une liste des mandataires associés et des accords d'itinérance de ces mandataires (C1-C4) avec les opérateurs (Oa-Of),
- chaque mandataire (C1-C4) ayant
• un logiciel applicatif pour
• traiter vers un destinataire, la signalisation envoyée par un opérateur (O1i) à son mandataire (C1) mandataire d'origine,
• déterminer, par le numéro (MSISDN) du mobile destinataire (B), le réseau nominal auquel il appartient et le pays de ce réseau nominal,
• exécuter un algorithme pour déterminer un mandataire associé (C2-C4) mandataire final, ayant des accords d'itinérance avec les opérateurs (Oa-Of) du pays (Pa) de l'opérateur du réseau nominal,
• inscrire l'adresse du mandataire final dans le champ « Destination Address »,
• inscrire l'adresse du mandataire final dans le champ « Destination Reference » si le mandataire d'origine (C1) ne peut s'adresser directement au mandataire final (C3) mais seulement par un mandataire intermédiaire (C2) et inscrire l'adresse du mandataire intermédiaire (C2) dans le champ « Destination Address »,
• extraire chez le mandataire final (C4), le numéro du réseau nominal à partir du numéro MSISDN transmis, pour lancer ensuite la signalétique vers les opérateurs du pays (Pa) concerné et liés à ce mandataire final (C3),
• en cas d'échec de la tentative, exécuter un nouvel algorithme pour reprendre la procédure ci-dessus avec un autre mandataire final(C2, C4).

2. Système de transmission selon la revendication 1,
**caractérisé en ce qu'**
il utilise des logiciels SS7 standards de la couche MAP ou CAMEL à la couche SCCP.

3. Système de transmission selon la revendication 1,
**caractérisé en ce que**
les logiciels applicatifs se servent du paramètre « Destination Reference » et/ou « Origine Reference » du MAP OPEN ou du CAMEL OPEN pour recevoir du mandataire précédent ou mettre l'adresse du mandataire final s'il est différent d'un mandataire directement relié adjacent, la procédure de transmission permettant de considérer l'ensemble du réseau constitué des différents mandataires, comme transparent, tout en fournissant le service en cas de portabilité du numéro pour les SMS ou le routage optimal vis-à-vis des équipements clients SMSC, GMSC ou autres qui restent munis de leurs logiciels standards non modifiés pour cela, et notamment effectuant la négociation de compatibilité de version de protocole MAP ou CAMEL dans le mandataire final de la chaîne de transmission dans tous les cas, y compris la portabilité du numéro.

## Claims

1. Transmission system having a plurality of agents for the virtual roaming of mobiles with optional portability, the number of the mobiles being the number referred to as the nominal number before they are ported,
**characterised in that**
it comprises a group of operators (O1i, Oij) which are each connected to the agent (C1-C4) thereof,
- the agents (C1-C4) co-operating for the transmission of the signals,
- at least one agent having a numbering plan comprising:
. a list of nominal networks (Oa-Of) and countries (Pa) to which they belong, and
. a list of associated agents and roaming agreements for these agents (C1-C4) with the operators (Oa-Of),
- each agent (C1-C4) having
. an item of application software for
. forwarding to a recipient the signals sent by an operator (O1i) to its agent (C1), original agent,
. determining, via the number (MSISDN) of the destination mobile (B), the nominal network to which it belongs and the country of this nominal network,
. executing an algorithm in order to determine an associated agent (C2-C4), final agent, who has roaming agreements with the operators (Oa-Of) of the country (Pa) of the operator of the nominal network,
. entering the address of the final agent in the field "Destination Address",
. entering the address of the final agent in the field "Destination Reference" if the original agent (C1) cannot address the final agent (C3) directly but only via an intermediate agent (C2) and entering the address of the intermediate agent (C2) in the field "Destination Address",
. extracting from the final agent (C4) the number of the nominal network from the MSISDN number transmitted, in order to then direct the signals towards the operators of the country (Pa) concerned which are connected to this final agent (C3),
. if this attempt fails, executing a new algorithm in order to repeat the procedure above with another final agent (C2, C4).

2. Transmission system according to claim 1,
**characterised in that**
it uses standard items of SS7 software from the MAP or CAMEL layer to the SCCP layer.

3. Transmission system according to claim 1,
**characterised in that**
the items of application software use the parameter "Destination Reference" and/or "Origin Reference" from MAP OPEN or CAMEL OPEN in order to receive from the preceding agent or to place the address of the final agent if it is different from a directly connected agent, adjacent agent, the transmission procedure allowing all of the network constituted by the various agents to be considered to be transparent, whilst providing the service in the event of number portability for SMS or optimum routing with respect to the client equipment SMSC, GMSC or the like which are still provided with their standard, non-modified software for this purpose, and in particular carrying out the negotiation of the compatibility of the version of the MAP or CAMEL protocol in the final agent of the transmission chain in all cases, including the portability of the number.

## Patentansprüche

1. Übertragungssystem mit mehreren Beauftragten für virtuelles Roaming von Mobiltelefonen mit eventueller Portabilität, wobei die Mobiltelefone als Rufnummer eine sogenannte nominelle Nummer aufweisen, bevor sie portiert werden,
**dadurch gekennzeichnet, dass** es eine Gruppe von Betreibern (O1i, Oij) umfasst, die jeweils mit ihrem Beauftragten (C1 - C4) verbunden sind,
- wobei die Beauftragten (C1 - C4) im Hinblick auf die Übertragung der Signalisierung zusammenwirken,
- wobei mindestens ein Beauftragter einen Kennzahlenplan besitzt, der folgendes aufweist :
• eine Liste von nominellen Netzen (Oa - Of) und Ländern (Pa), zu denen sie gehören, und
• eine Liste von zugehörigen Beauftragten und von Roaming-Vereinbarungen dieser Beauftragten (C1 - C4) mit den Betreibern (Oa - Of),
- wobei jeder Beauftragte (C1 - C4) folgendes besitzt:
• eine Anwendungssoftware, um
■ die von einem Betreiber (01 i) an seinen Beauftragten (C1)-den ursprünglichen Beauftragten - gesendete Signalisierung zu einem Empfänger hin zu verarbeiten,
■ über die Mobilfunknummer (MSISDN) des Empfängers (B) das nominelle Netz zu bestimmen, zu dem es gehört, sowie das Land dieses nominellen Netzes,
■ einen Algorithmus auszuführen, um einen zugehörigen Beauftragten (C2 - C4) - den Endbeauftragten - zu bestimmen, der Roaming-Vereinbarungen mit den Betreibern (Oa -Of) des Landes (Pa) des Betreibers des nominellen Netzes besitzt,
■ die Adresse des Endbeauftragten in das Feld «Destination Address» [Zieladresse] einzutragen,
■ die Adresse des Endbeauftragten in das Feld «Destination Reference» [Zielreferenz] einzutragen, wenn sich der ursprüngliche Beauftragte (C1) nicht direkt an den Endbeauftragten (C3) wenden kann, sondern nur über einen Zwischenbeauftragten (C2), und um die Adresse des Zwischenbeauftragten (C2) in das Feld «Destination Address» einzutragen,
■ bei dem Endbeauftragten (C4) die Nummer des nominellen Netzes aus der übertragenen MSISDN-Nummer zu entnehmen, um anschließend die Signalisierung zu den Betreibern des betreffenden Landes (Pa) zu leiten, die mit diesem Endbeauftragten (C3) verbunden sind,
■ bei Scheitern des Versuchs einen neuen Algorithmus auszuführen, um das oben genannte Verfahren mit einem anderen Endbeauftragten (C2, C4) erneut durchzuführen

2. Übertragungssystem nach Anspruch 1, **dadurch gekennzeichnet, dass** es die SS7 Standardsoftware von der MAP- oder CAMEL-Schicht bis zu der SCCP-Schicht verwendet.

3. Übertragungssystem nach Anspruch 1, **dadurch gekennzeichnet, dass** die Anwendungssoftware für den Empfang von dem vorherigen Beauftragten oder das Speichern der Adresse des Endbeauftragten den Parameter «Destination Reference» [Zielreferenz] und / oder «Origin Reference» [Ursprungsreferenz] von MAP OPEN oder CAMEL OPEN verwendet, wenn der Endbeauftragte ein anderer ist als der direkt verbundene, angrenzende Beauftragte, wobei das Übertragungsverfahren es erlaubt, das gesamte Netz aus verschiedenen Beauftragten als transparent anzusehen, wobei gleichzeitig der Dienst im Falle der Rufnummernportabilität für die SMS oder das optimale Routing gegenüber den SMSC-, GMSC- oder anderen Kundenanlagen geliefert wird, die dafür ihre Standardsoftware behalten, welche nicht dafür geändert wird, und insbesondere die Verhandlung über die Kompatibilität der Version des MAP- oder CAMEL-Protokolls bei dem Endbeauftragten der Übertragungskette in allen Fällen, einschließlich der Rufnummernportabilität, durchgeführt wird.
